# EUROPÄISCHE PATENTSCHRIFT

(11) **EP 3 443 445 B1**
(45) Veröffentlichungstag und Bekanntmachung des Hinweises auf die Patenterteilung: **10.05.2023**
(21) Anmeldenummer: 17707560.3
(22) Anmeldetag: 28.02.2017
(51) Int. Cl.: G06F 3/041, B32B 17/10

(54) **VERBUNDGLASSCHEIBE MIT EINER SENSORANORDNUNG, ÜBERTRAGUNGSSYSTEM UND VERFAHREN ZUR HERSTELLUNG EINER VERBUNDGLASSCHEIBE MIT EINER SENSORANORDNUNG**
LAMINATED GLASS WITH A SENSOR ARRANGEMENT, TRANSMISSION SYSTEM AND METHOD FOR MAKING A LAMINATED GLASS WITH A SENSOR ARRANGEMENT
VITRE COMPOSITE COMPRENANT UN SYSTEME DE CAPTEUR, SYSTEME DE TRANSMISSION ET PROCEDE DE FABRICATION D'UNE VITRE COMPOSITE COMPRENANT UN SYSTEME DE CAPTEUR

(30) Priorität: 12.04.2016 EP 16164807
(43) Veröffentlichungstag der Anmeldung: 20.02.2019
(73) Patentinhaber: SAINT-GOBAIN GLASS FRANCE, 92400 Courbevoie (FR)
(72) Erfinder: SCHMALBUCH, Klaus, 84220 Goult (FR); DROSTE, Stefan, 52134 Herzogenrath (DE); EFFERTZ, Christian, 52080 Aachen (DE); WEBER, Patrick, 52477 Alsdorf (DE)
(74) Vertreter: Gebauer, Dieter Edmund
(86) Internationale Anmeldenummer: PCT/EP2017/054568
(87) Internationale Veröffentlichungsnummer: WO 2017/178146

(56) Entgegenhaltungen:
- WO-A1-2013/091961
- JP-A- 2004 334 445
- US-A1- 2006 208 905

## Beschreibung

Die Erfindung betrifft eine Verbundglasscheibe mit einer Sensoranordnung, ein Übertragungssystem und ein Verfahren zur Herstellung der Verbundglasscheibe mit Sensoranordnung.

Verbundglasscheiben werden heute an vielen Orten, insbesondere im Fahrzeugbau, verwendet. Dabei ist der Begriff Fahrzeug weit gefasst und betrifft unter anderem Straßenfahrzeuge, Flugzeuge, Schiffe, landwirtschaftliche Maschinen oder auch Arbeitsgeräte. Auch in anderen Bereichen werden Verbundglasscheiben verwendet. Hierzu zählen beispielsweise Gebäude-Verglasungen als auch Informationsdisplays, z.B. in Museen oder als Werbedisplays. Dabei weist eine Verbundglasscheibe im Allgemeinen zwei Glasflächen auf, die auf eine Zwischenschicht laminiert sind. Die Glasflächen selbst können eine Krümmung aufweisen und sind in aller Regel von konstanter Dicke. Die Zwischenschicht weist in aller Regel ein thermoplastisches Material, in aller Regel Polyvinylbutyral (PVB), einer vorbestimmten Dicke, z.B. 0,76 mm, auf.

Häufig besteht der Wunsch, Sensoren unterschiedlicher Art anzubringen. Bisherige Sensoren wurden in eigenen Gehäusen mit eigener Verkabelung auf der Scheibe untergebracht. So wurden z.B. in der Vergangenheit und Gegenwart Regensensoren auf der Innenseite von Autowindschutzscheiben angebracht und mit der entsprechenden Automobilelektronik verkabelt. Verkabelungen und Anschlüsse von Sensoren stellen einen Schwachpunkt dar, denn in Fahrzeugen sind die Verkabelungen und Anschlüsse hohen Temperaturunterschieden und Feuchtigkeitsbereichen ausgesetzt. Hier treten beispielsweise selbst in mittleren Breiten Temperauren von -10° C und bis weit über +70° C auf. Zudem sind Sensorgehäuse häufig optisch unattraktiv und erweisen sich auch als Hindernis bei der Reinigung. Zwar könnte man überlegen einen Sensor innerhalb der Scheibe anzuordnen und elektrische Kontaktierungen durch entsprechende Bohrungen in der Glasscheibe zu führen, jedoch stellt dies eine Schwächung der Scheibe dar, sodass es zum einen schneller zur Rissbildung kommen könnte zum anderen aber auch zu einem Eindringen von Feuchtigkeit und/oder Schmutz und/oder aggressiven Gasen, sodass die Standfestigkeit des Verbundsystems beeinträchtigt oder sogar nachhaltig geschädigt werden könnte. Auch wäre ein Feuchtigkeitseintritt nur schwer wieder zu entfernen, sodass nachhaltig die Transmission der Scheibe beeinträchtigt sein könnte. Zudem ist durch die Verkabelung der Ort eines möglichen Sensors auf den nahen Rand einer Verbundglasscheibe eingeschränkt, da Leitungsverbindungen durch das Sichtfeld zum einen nicht statthaft sein können, da gewisse Transmissionsbedingungen erfüllt sein müssen, zum anderen aber auch als störend empfunden werden.

Beispielsweise ist aus der WO 2013 / 091 961 A1 eine Verbundglasscheibe bekannt, die einen randständigen Sensor und eine randständige Antenne aufweist.

Aus der JP 2004 334445 A ist ein Sicherheitsglas mit einem Glasbruchsensor bekannt, für das keine Energiequelle erfolrderlich ist.

US 2006/2008905 A1 zeigt eine Verbundscheibe mit einem elektrischen Etikett, das in einer Zwischenschicht im Randbereich der Verbundscheibe angeordnet ist.

Ausgehend von dieser Situation ist es eine Aufgabe der Erfindung eine verbesserte Verbundglasscheibe mit einer Sensoranordnung, ein verbessertes Übertragungssystem und ein Verfahren zur Herstellung der Verbundglasscheibe mit Sensoranordnung bereitzustellen, wobei bisherige Probleme vermieden werden sollen.

Die Aufgabe wird durch eine erfindungsgemäße Verbundglasscheibe gelöst.

Die Erfindung ist definiert durch die unabhängigen Ansprüche.

Weitere vorteilhafte Ausführungsformen sind in den abhängigen Ansprüchen definiert.

Mittels der erfindungsgemäßen Verbundglasscheibe ist es möglich, auf bisherige Gehäuse von Sensoren zu verzichten und zudem den Verkabelungsaufwand zu reduzieren. Weiterhin erlaubt die Erfindung Sensoren freier zu platzieren.

In einer Weiterbildung der Erfindung sind die Empfangsantenne und die Sendeantenne in einer physikalischen Antenne vereint. Hierdurch kann erreicht werden, dass der Aufwand für Bauelemente reduziert wird.

Erfindungsgemäß ist die Sensoranordnung auf der Kombinationsfolie oder einem Träger innerhalb der Verbundglasscheibe aufgebracht. Durch die Anbringung auf der Kombinationsfolie oder einem Träger kann die Herstellung vereinfacht werden.

In einer Weiterbildung der Erfindung weist die Sensoranordnung einen Temperatursensor und/oder einen Lichtsensor und/oder einen Berührungssensor und/oder einen Bruchsensor und/oder einen Regensensor auf. Durch die Erfindung wird es ermöglicht, einen Sensor oder mehrere Sensoren vereinfacht anzubringen und auszulesen.

Erfindungsgemäß weist die Sensoranordnung eine Auswerteeinheit zur Evaluierung von Information eines Sensors und zur Erstellung von Information zur Weitergabe an die Sendeantenne auf. Hierdurch kann bereits eine Vielzahl von Sensordaten vorverarbeitet werden, sodass nur wenige Informationen an andere Einrichtungen zur Verfügung gestellt werden müssen. Hierdurch sinkt der Implementierungsaufwand für die Datenübertragung.

Gemäß einer Weiterbildung der Erfindung sind zumindest Teile der Sendeantenne und/oder der Empfangsantenne als Drähte auf oder in der Kombinationsfolie aufgebracht bzw. eingebracht. Durch die Anbringung auf der Kombinationsfolie kann die Herstellung vereinfacht werden.

Gemäß noch einer Weiterbildung der Erfindung nutzt die Sensoranordnung die Sendeantenne und/oder die Empfangsantenne als Sensor. Hierdurch kann erreicht werden, dass der Aufwand für Bauelemente reduziert wird.

Erfindungsgemäß sind die Leistungsversorgungseinrichtung und die Datenempfangseinrichtung auf einer Außenseite der ersten und/oder der zweiten Glas-Schicht angeordnet. Hierdurch kann ein kostengünstiges Sensorsystem bereitgestellt werden, das lediglich minimalen Verkabelungsaufwand benötigt.

In einer weiteren Ausgestaltung der Erfindung ist eine Antennenstruktur der Leistungsversorgungseinrichtung und/oder eine Antennenstruktur der Datenempfangseinrichtung als Draht oder als gedruckter elektrischer Leiter ausgebildet. Hierdurch kann erreicht werden, dass der Aufwand für Bauelemente reduziert wird.

Weiterhin wird die Aufgabe gelöst durch ein Übertragungssystem mit einer erfindungsgemäßen Verbundglasscheibe, die die räumlich von der Sensoranordnung getrennte Leistungsversorgungseinrichtung zur Bereitstellung von elektromagnetischer Leistung an die Empfangsantenne und die Datenempfangseinrichtung zum Empfang von Daten der Sendeantenne aufweist. Hierdurch kann ein kostengünstiges Sensorsystem bereitgestellt werden, das lediglich minimalen Verkabelungsaufwand bei freier Platzierbarkeit der Sensoren benötigt.

In einer Weiterbildung der Erfindung sind die Leistungsversorgungseinrichtung und die Datenempfangseinrichtung in einer physikalischen Antenne vereint. Hierdurch kann erreicht werden, dass der Aufwand für Bauelemente reduziert wird.

Gemäß einer Weiterbildung der Erfindung wandelt die Datenempfangseinrichtung von der Sendeantenne erhaltene Informationen um und stellt sie an ein Bus-System zur Verfügung. Hierdurch kann ein kostengünstiges Sensorsystem bereitgestellt werden, das lediglich minimalen Verkabelungsaufwand benötigt.

Gemäß einer Weiterbildung der Erfindung werden mindestens zwei Sensoren durch eine gemeinsame Leistungsversorgungseinrichtung versorgt und/oder es werden Daten von den zwei Sensoren durch eine gemeinsame Datenempfangseinrichtung empfangen.

Die Aufgabe wird weiterhin gelöst durch ein Verfahren zur Herstellung einer erfindungsgemäßen Verbundglasscheibe mit einer Sensoranordnung, aufweisend den Schritt des Erhaltens einer Sensoranordnung, den Schritt des Einbringens der Sensoranordnung in ein Vorprodukt der Verbundglasscheibe, wobei der Schritt des Einbringens ausgewählt ist aus Laminieren, Kleben, Auflegen und den Schritt des Fertigstellens der Verbundglasscheibe. Hierdurch kann eine erfindungsgemäße Verbundglasscheibe kostengünstig hergestellt werden.

Gemäß einer Weiterbildung der Erfindung werden Teile der Sensoranordnung mittels einer Laserformatierung, einer silberbeschichteten Folie, einem Flachleiter oder Siebdruck eingebracht. Hierdurch kann ein weiterer Kosten- und Zeitgewinn bei der Herstellung erzielt werden.

Ausführungsformen der vorliegenden Erfindung werden in exemplarischer Weise mit Bezug auf die angehängten Zeichnungen beschrieben, welche zeigen:
Fig. 1 eine schematische Darstellung einer Verbundglasscheibe gemäß Ausführungsformen der Erfindung,
Fig. 2 eine schematische Darstellung von elektrischen Komponenten einer Sensoranordnung gemäß Ausführungsformen der Erfindung,
Fig. 3 eine schematische Schnittdarstellung einer Verbundglasscheibe gemäß Ausführungsformen der Erfindung,
Fig. 4 eine schematische Schnittdarstellung einer Verbundglasscheibe gemäß Ausführungsformen der Erfindung,
Fig. 5 eine schematische Schnittdarstellung einer Verbundglasscheibe gemäß Ausführungsformen der Erfindung, und
Fig. 6 eine schematische Darstellung einer Fahrzeugtür mit einer Verbundglasscheibe gemäß Ausführungsformen der Erfindung.

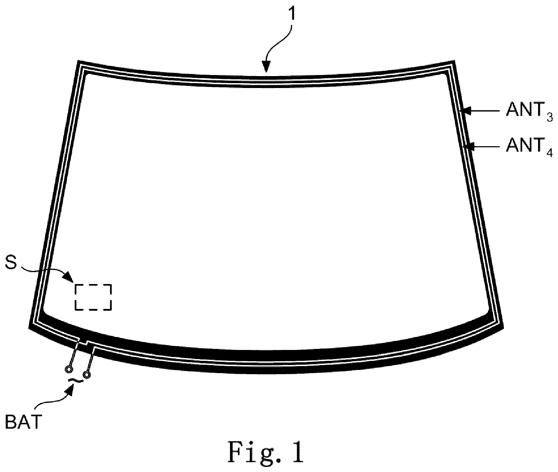

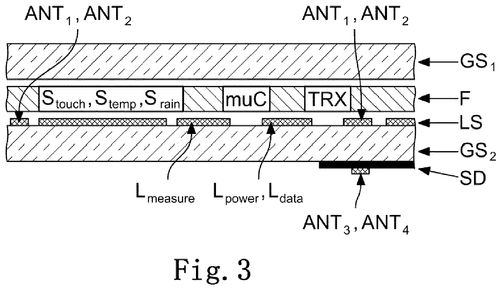

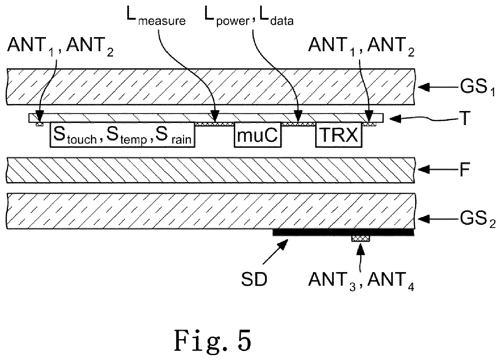

In Figur 1 ist eine schematische Darstellung einer Verbundglasscheibe 1 gemäß Ausführungsformen der Erfindung gezeigt. Schematische Schnittdarstellungen einzelner Ausführungsformen sind in den Figuren 3-5 dargestellt.

Die Verbundglasscheibe 1 weist - wie aus den Figuren 3-5 ersichtlich ist - eine erste Glas-Schicht GS₁ und eine zweite Glas-Schicht GS₂ auf. Die erste Glas-Schicht GS₁ und zweite Glas-Schicht GS₂ sind unmittelbar oder mittelbar über eine Kombinationsfolie F verbunden. Mittelbar, wenn zumindest abschnittsweise weitere Materialien lokal oder global zwischen den Glas-Schichten angeordnet sind. Hierzu folgen im Weiteren noch Erläuterungen.

Eine derartige thermoplastische Kombinationsfolie F kann zumindest einen Stoff ausgewählt aus der Gruppe aufweisend Polybutylenterephthalat (PBT), Polycarbonat (PC), Polyethylenterephthalat (PET) und Polyethylennaphthalat (PEN), Polyvinylchlorid (PVC), Polyvinylfluoride (PVF), Polyvinylbutyral (PVB), Ethylenvinylacetat (EVA), Polyacrylat (PA), Polymethylmethacrylat (PMMA), Polyurethan (PUR), und/oder Gemische und Copolymere davon enthalten.

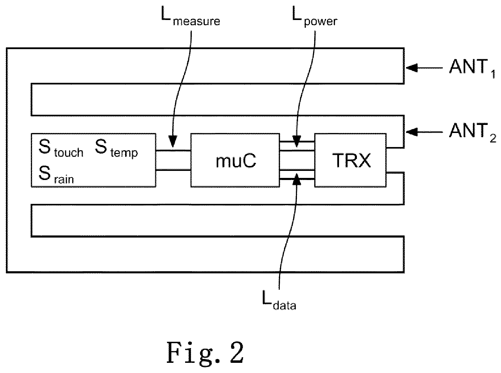

Die erfindungsgemäße Verbundglasscheibe 1 weist weiterhin eine Sensoranordnung S auf. Eine schematische Darstellung von elektrischen Komponenten der Sensoranordnung gemäß Ausführungsformen der Erfindung ist in Figur 2 dargestellt. Dabei wird nachfolgend nur die logische Struktur beschrieben werden, während Vorschläge einer tatsächlichen Implementierung erst später beschrieben werden.

Die Sensoranordnung S weist zum einen eine (logische) Empfangsantenne ANT₁ zum Erhalt elektrischer Leistung zur Versorgung der Sensoranordnung S und eine (logische) Sendeantenne ANT₂ zur Bereitstellung von Information der Sensoranordnung S an eine außerhalb der Verbundglasscheibe befindliche Empfangseinheit auf. Die Sensoranordnung S befindet sich dabei teilweise oder vollständig zwischen der ersten Glas-Schicht GS₁ und der zweiten Glas-Schicht GS₂.

Dabei kann eine Sensoranordnung S einen oder mehrere Sensoren aufweisen. Beispielhaft seien hier Regensensoren Sᵣₐᵢₙ, z.B. zur Erkennung von Regen/Eis, z.B. auf einer Windschutzscheibe, Temperatursensoren Sₜₑₘₚ, z.B. zur Messung der Temperatur, Lichtsensoren, z.B. zur Erkennung einer Umgebungshelligkeit, Berührungssensoren S_{touch}, z.B. für Bedienungselemente eines Head-Up-Displays, Bruchsensor S_{break}, z.B. zur Erkennung von Beschädigungen der Verbundglasscheibe 1, genannt. Die Verbundglasscheibe 1 kann auch mehrere Sensoranordnungen S aufweisen.

Beispielsweise kann die Sensoranordnung in die in Figur 2 schematisch dargestellten logischen Blöcke aufgeteilt sein. So kann z.B. eine Sende-/Empfangseinheit TRX vorgesehen sein, die mittels der (logischen) Antennen ANT₁ und ANT₂ Energie für die Sensoranordnung bezieht als auch Informationen an die hierzu externe Empfangseinheit zur Verfügung stellt. Diese Sende-/Empfangseinheit TRX stellt über eine geeignet hergestellte (logische) Verbindung L_{power} nachfolgenden Einrichtungen elektrische Energie zur Verfügung. Beispielhaft ist hier ein (optionaler) Microcontroller muC als eine Auswerteeinheit zur Evaluierung von Information eines Sensors und ein Sensor Sᵣₐᵢₙ, Sₜₑₘₚ, S_{touch} dargestellt. Der Sensor Sᵣₐᵢₙ, Sₜₑₘₚ, S_{touch} ist über eine geeignet hergestellte (logische) Verbindung Lₘₑₐₛᵤᵣₑ verbunden. Dabei kann hier sowohl eine direkte Messung vorgesehen sein, d.h. der Sensor ändert z.B. unter Einfluss der zu messenden Größe einen Strom/eine Spannung/eine Änderung der Resonanzfrequenz der Antenne hervorgerufen durch eine Änderung der Induktivität oder Kapazität hervorgerufen durch die Änderung der dielektrischen Eigenschaften des Sensors oder der Umgebung des Sensors, die nachfolgend ausgewertet werden kann, oder aber der Sensor stellt Daten zur Verfügung. D.h. die logische Verbindung Lₘₑₐₛᵤᵣₑ kann sowohl der Energieversorgung als auch der Daten/Messwert-Bereitstellung dienen. Im Falle, dass eine Auswertung der Daten/Messwerte durch eine Auswerteeinheit muC vorgenommen wird, können die aufbereiteten Daten als Information über die logische Verbindung L_{data} an die Sende-/Empfangseinheit TRX zur Verfügung gestellt werden. Die Sende-/Empfangseinheit stellt dann die Information über die (logische) Antenne ANT2 an die externe Empfangseinheit zur Verfügung. D.h. Daten des Sensors Sᵣₐᵢₙ, Sₜₑₘₚ, S_{touch} können sowohl unmittelbar mittels der Sende-/Empfangseinheit TRX zur Verfügung gestellt werden als auch in Ausführungsformen mittels einer Auswerteeinrichtung muC vorverarbeitet werden.

Dieser Verbundglasscheibe 1 steht als interagierendes Element innerhalb eines Übertragungssystems eine räumlich von der Sensoranordnung S getrennte (logische) Leistungsversorgungseinrichtung ANT₃ zur Bereitstellung von elektromagnetischer Leistung an die Empfangsantenne ANT₁ und eine (logische) Datenempfangseinrichtung ANT₄ zum Empfang von Daten der Sendeantenne ANT₂ gegenüber. Nunmehr kann mittels der Leistungsversorgungseinrichtung ANT₃ Energie z.B. mittels elektromagnetischer Wechselfelder an die Empfangsantenne ANT₁ übertragen werden, ohne dass es einer störenden Versorgungsleitung auf oder zwischen den Glas-Schichten GS₁ und GS₂ bedarf. Ebenso können Informationen der Sensoranordnung S mittels der Sendeantenne ANT₂ an eine außerhalb der Verbundglasscheibe 1 befindliche Empfangseinheit, nämlich der Datenempfangseinrichtung ANT₄, übertragen werden, ohne dass es einer störenden Versorgungsleitung auf oder zwischen den Glas-Schichten GS₁ und GS₂ bedarf. Dabei kann in Bezug auf die Sensoranordnung S auf ein Gehäuse verzichtet werden, denn die Sensoranordnung S ist zwischen den Glas-Schichten geschützt. Zudem muss keine Verkabelung der Sensoranordnung S vorgesehen werden, wodurch die Fehleranfälligkeit bisheriger Systeme vermieden wird. Zudem können die Sensoren an ergonomisch sinnvollen oder messtechnisch vorteilhafteren Stellen platziert werden, ohne eine Gefahr für die Transmission darzustellen. Damit sind die bisherigen Limitierungen zur Platzierung aufgehoben und es wird somit auch die innovative Integration neuer Sensorkonzepte, z.B. in ein graphisches Benutzersystem, ermöglicht.

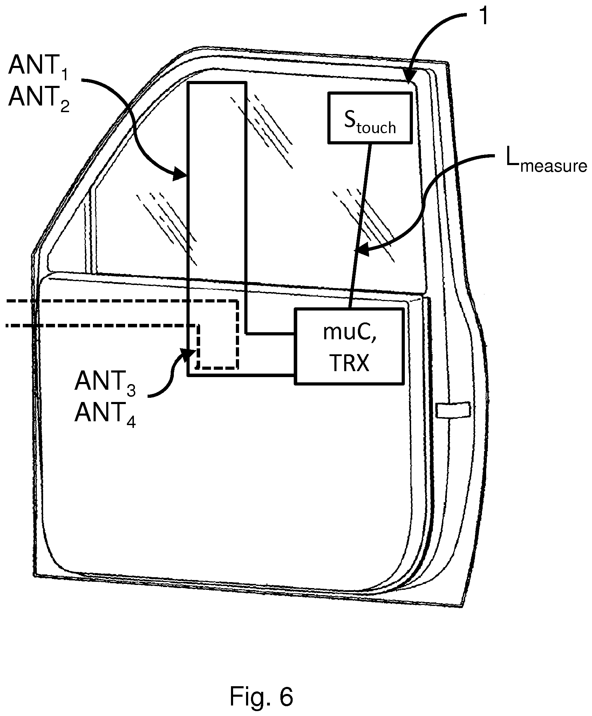

Beispielsweise ist in Figur 6 eine Autotür dargestellt. Die Verbundglasscheibe 1 weist wie zuvor beschrieben eine Sensoranordnung auf. Dabei ist ein Sensor S_{touch} für ein schlüsselloses Zugangssystem vorgesehen. Der Sensor S_{touch} ist über eine elektrische Verbindung Lₘₑₐ₋ₛᵤᵣₑ innerhalb der Verbundglasscheibe 1 mit einer kombinierten Auswerteeinheit und Sende- / Empfangseinheit muC/TRX verbunden. Die kombinierte Auswerteeinheit und Sende- / Empfangseinheit muC/TRX wiederum ist an eine (logische) Empfangsantenne ANT₁ und eine (logische) Sendeantenne ANT₂ angebunden. Mittels einer in der Tür, z.B. in der Türinnenverkleidung, angeordneten (logischen) Leistungsversorgungseinrichtung ANT₃ und einer (logischen) Datenempfangseinrichtung ANT₄ kann nunmehr der Sensor S_{touch} als auch die kombinierte Auswerteeinheit und Sende- / Empfangseinheit muC/TRX mit elektrischer Energie (kontaktlos) versorgt werden bzw. Daten ausgelesen werden. Da die Seitenscheibe in aller Regel öffenbar gestaltet ist, kann durch eine geschickte Anordnung und Ausgestaltung der (logischen) Empfangsantenne ANT₁ und der (logischen) Sendeantenne ANT₂ erreicht werden, dass weitestgehend unabhängig vom Öffnungsgrad, d.h. einem Einschieben in den Türrahmen, die (logische) Empfangsantenne ANT₁ und die (logische) Sendeantenne ANT₂ im Einflussbereich der (logischen) Leistungsversorgungseinrichtung ANT₃ und der (logischen) Datenempfangseinrichtung ANT₄ verbleiben. Die von der (logischen) Datenempfangseinrichtung ANT₄ empfangenen Daten können dann z.B. an die Fahrzeugsteuerung weitergereicht werden, um z.B. die Türen freizugeben oder aber bei einer Vielzahl von Fehlversuchen eine Alarmierung zu veranlassen. Durch die Anordnung innerhalb der Scheibe und die drahtlose Anbindung können je nach Ausgestaltung des Sensors S_{touch} zahlreiche insbesondere andernfalls als beweglich auszugestaltende Kabelverbindungen entfallen, sodass zum einen die Verfügbarkeit eines solchen schlüssellosen Zugangssystems erhöht wird, zum anderen aber auch bisherige Schwierigkeiten, wie z.B. die Integration in die Karosserie eines Fahrzeuges, vermieden werden können. Weiterhin ist von Vorteil, dass die Anordnung so gestaltet werden kann, dass im Wesentlichen keine Verlustleistung durch Abstrahlung entsteht, da die Antennen abgestimmt aufeinander angeordnet werden können. Hierdurch wird die Gefahr eines Abhörens der Kommunikation vermindert. Weiterhin vorteilhaft kann die (logische) Empfangsantenne ANT₁ und die (logische) Sendeantenne ANT₂ innerhalb der Verbundglasscheibe 1 so angeordnet sein, dass sie (jeweils) nicht in den Blickbereich eines Benutzers geraten, z.B. indem sie unterhalb der sogenannten daylight-line angeordnet sind. Die daylight-line entspricht bei geschlossener Scheibe der Überdeckung durch die Türverkleidung.

In einer vorteilhaften Ausgestaltung können die Empfangsantenne ANT₁ und die Sendeantenne ANT₂ in einer physikalischen Antenne vereint sein. Dies ist in aller Regel ohne Störung möglich. Beispielsweise kann ein halb-Duplex Übertragungsprotokoll vorgesehen sein, sodass in einem ersten Zeitintervall Energie zur Verfügung gestellt wird und in einem zweiten Zeitintervall Daten zur Verfügung gestellt werden. Diese (physikalische) Vereinigung der logischen Antennen ANT₁ und ANT2 reduziert den Bauteilaufwand und minimiert den Flächenbedarf für die Antennen. Somit wird der Bereich, in dem eine verminderte Transparenz unter Umständen gegeben wäre, klein gehalten.

In einer weiteren Ausgestaltung, die alternativ oder zusätzlich Verwendung finden kann, ist die Sensoranordnung S als Ganzes oder in Teilen, d.h. die Empfangsantenne ANT₁ und/oder die Sendeantenne ANT₂ und/oder eine optional vorhandene Auswerteeinheit TRX auf der Kombinationsfolie F oder einem Träger T innerhalb der Verbundglasscheibe 1 aufgebracht. Der Träger T kann z.B. ebenfalls aus einem Material wie die Kombinationsfolie F gefertigt sein und als Einlegestück in einen korrespondierenden Ausschnitt der Kombinationsfolie F bei der Fertigung eingefügt werden, z.B. vor der verbindenden Wärmebehandlung in einem Autoklaven.

Wie bereits beschrieben, kann die Sensoranordnung S unterschiedliche Arten und Anzahlen von Sensoren aufweisen, beispielsweise einen Temperatursensor Sₜₑₘₚ und/oder einen Lichtsensor und/oder einen Berührungssensor S_{touch} und/oder einen Bruchsensor S_{break} und/oder einen Regensensor Sᵣₐᵢₙ.

In einzelnen Ausführungsformen ist zudem vorgesehen, dass die Sensoranordnung S eine Auswerteeinheit muC zur Evaluierung von Information eines Sensors S_{touch}, Sₜₑₘₚ, S_{break}, Sᵣₐᵢₙ und zur Erstellung von Information zur Weitergabe an die Sendeantenne aufweist. Hiermit kann die Datenmenge, die zu übertragen wäre, reduziert werden und eine Vorverarbeitung der Rohdaten vorgenommen werden. Die Auswerteeinheit muC kann beispielsweise mittels eines digitalen Signalprozessors, eines MikroControllers, eines ASICs (application-specific integrated circuit) oder eines FPGA (Field Programmable Gate Array) implementiert sein, ohne jedoch auf diese Beispiele beschränkt zu sein. Ohne weiteres können die Sende-/Empfangseinheit TRX und die Auswerteeinheit auch in einer Einheit vereinigt sein.

In einer Ausbildung der Erfindung kann vorgesehen sein, dass der Sendeantenne ANT₁ und/oder der Empfangsantenne ANT₂ eine Doppelfunktion zukommt. So können z.B. die Sendeantenne und/oder die Empfangsantenne auch Teile eines Sensors sein und so z.B. Kapazitätsänderungen infolge von Berührung und/oder Benetzung (Regensensor) und/oder Bruch messen und wie bereits zuvor beschrieben direkt oder vorverarbeitet der Sendeempfangseinheit TRX zur Verfügung stellen.

In einer Ausgestaltung der Erfindung sind zumindest Teile der Sendeantenne ANT₁ und/oder der Empfangsantenne ANT₂ als Drähte auf die Kombinationsfolie F aufgebracht bzw. oder in die Kombinationsfolie F eingebracht.

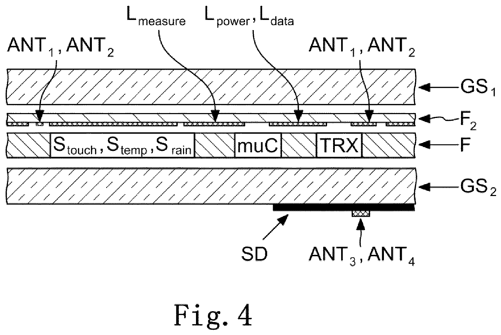

Beispielsweise sind Drähte auf einer Kombinationsfolie in Figur 4 dargestellt. Hier sind Leiterbahnen auf einer Kombinationsfolie F₂ aufgebracht. Die Kombinationsfolie F₂ kann aus demselben Material wie die Kombinationsfolie F oder aus einem anderen Material wie es für Kombinationsfolien geeignet ist, bestehen. Darüber hinaus kann das Material auch hiervon abweichen, z.B. eine Polyethylen-Folie oder eine PET-Folie (Polyethylenterephthalat), dann kann es jedoch unter Umständen erforderlich sein, zwischen der Glas-Schicht GS₁ und der Kombinationsfolie F₂ noch eine weitere geeignete (und der Einfachheit halber nicht dargestellte) Kombinationsfolie einzufügen. Alternativ oder zusätzlich können die Leiterbahnen auch in die Kombinationsfolie F eingelagert sein.

Alternativ oder zusätzlich können Drähte der Sendeantenne ANT₁ und/oder der Empfangsantenne ANT₂ und/oder die Verbindung L_{power}, Lₘₑₐₛᵤᵣₑ, L_{data} auch (zumindest abschnittsweise) als strukturierte leitende Schicht LS - wie in Figur 3 gezeigt - implementiert sein. Typische Verfahren hierzu sind z.B. die Herstellung von laserformatierten Linien in einer leitfähigen Beschichtung LS des Glases oder einer zusätzlichen leitfähig beschichteten Kombinationsfolie F₂ oder Träger T, z.B. silberbeschichteten Folie, einem Flachleiter oder Silberdruck.

In der bisherigen Beschreibung wurde die Sensoranordnung beschrieben. Nun wenden wir uns der Beschreibung der Leistungsversorgungseinrichtung ANT₃ und/oder der Datenempfangseinrichtung ANT₄ zu. Die Leistungsversorgungseinrichtung ANT₃ und/oder die Datenempfangseinrichtung ANT₄ kann in geeigneter Form räumlich getrennt von der Sensoranordnung in der Nachbarschaft angeordnet sein. Dabei ist es zum Beispiel möglich, die Leistungsversorgungseinrichtung ANT₃ und/oder der Datenempfangseinrichtung ANT₄ im Rahmen einer Verbundglasscheibe 1 zu platzieren, sodass eine räumliche Nachbarschaft gewährleistet ist. Es ist aber auch möglich, entsprechende Einrichtungen in anderen Teilen einzuarbeiten. Beispielsweise wäre es bei einer Verbundglasscheibe in einem Kraftfahrzeug auch möglich, die Leistungsversorgungseinrichtung ANT₃ und/oder die Datenempfangseinrichtung ANT₄ im Dachhimmel des Fahrzeuges und/oder dem Armaturenbrett des Fahrzeuges und/oder der A-Säulen-Innverkleidung des Fahrzeuges unterzubringen. Gleichfalls ist es möglich, eine Leistungsversorgungseinrichtung ANT₃ und/oder eine Datenempfangseinrichtung ANT₄ auf einer Außenseite der ersten Glas-Schicht GS₁ und/oder der zweiten Glas-Schicht GS₂ - wie in den Figuren 1, 3-5 gezeigt - anzuordnen.

Typische Verfahren zur Herstellung der Leistungsversorgungseinrichtung ANT₃ und/oder der Datenempfangseinrichtung ANt₄ sind analog zu der Sendeantenne / Empfangsantenne und können wiederum Techniken wie Silberdruck, Strukturieren von Folien etc. aufweisen, die unter Umständen noch strukturiert werden

In den Figuren 1, 3-5 ist jeweils die Anordnung einer leitenden Schicht auf einem Schwarzdruck SD gezeigt. Typischerweise wird der Schwarzdruck SD am Rand vorgenommen, um eine Verbesserung der Klebefähigkeit von Scheiben am Rand zu erhalten und dem Kleber Schutz vor Sonneneinstrahlung zu bieten. Typischerweise wird Silberdruck zur Ausbildung von Antennen oder einer Heizfunktion vorgenommen. Bei der Erfindung wird dieser bei (Fahrzeug-) Scheiben bereits vorhandene Schwarz- und/oder Silberdruck jetzt mit zusätzlichen Funktionen versehen.

Wie in Figur 1 angedeutet, kann mittels des Bordnetzes und eines geeigneten Wechselstrom-Erzeugers, z.B. einem DC/AC-Wandler, aus dem Versorgungsnetz BAT des Fahrzeuges eine Wechselspannung erzeugt werden, die mittels einer Leistungsversorgungseinrichtung ANT₃, d.h. einer geeignet ausgestalteten Abstrahleinrichtung elektromagnetische Wechselfelder erzeugt, diese in die Empfangseinrichtung ANT₁ einkoppeln und so eine drahtlose Versorgung der Sensoranordnung S ermöglichen.

In einer vorteilhaften Ausgestaltung ist die Antennenstruktur der Leistungsversorgungseinrichtung ANT₃ und/oder die Antennenstruktur der Datenempfangseinrichtung ANT₄ als Draht oder als gedruckter elektrischer Leiter ausgebildet.

Wie zuvor für die Sensoranordnung beschrieben, können auch die logischen Antennen der Leistungsversorgungseinrichtung ANT₃ und der Datenempfangseinrichtung ANT₄ in einer physikalischen Antenne vereint sein. Die Informationen bzw. Daten, die von der Sendeantenne ANT₂ abgestrahlt werden, können mittels der Datenempfangseinrichtung ANT₄ aufgenommen werden. Die erhaltenen Daten können dann (nach Wandlung des HF-Signals und geeigneter Aufbereitung) an ein Bus-System zur Verfügung gestellt werden. Beispielsweise können Daten eines Helligkeitssensors zur Steuerung der Beleuchtung eines Fahrzeuges herangezogen werden, während Daten eines Regensensors zur Steuerung eines Scheibenwischers herangezogen werden, während Daten eines Berührungssensors zur Steuerung von anderen Fahrzeug-bezogenen Funktionen, wie z.B. eines Multi-Media-Systems, herangezogen werden können.

Ohne weiteres kann das System so dimensioniert werden, dass mindestens zwei Sensoranordnungen S durch eine gemeinsame Leistungsversorgungseinrichtung ANT₃ versorgt und/oder durch eine gemeinsame Datenempfangseinrichtung ANT₄ Daten empfangen werden können.

Die erfindungsgemäße Verbundglasscheibe 1 kann auf unterschiedliche Weise gefertigt sein. Ein beispielhaftes Verfahren weist den Schritt des Erhaltens einer Sensoranordnung S, den Schritt des Einbringens der Sensoranordnung S in ein Vorprodukt der Verbundglasscheibe, wobei der Schritt des Einbringens ausgewählt ist aus Laminieren, Kleben, Auflegen, und den Schritt des Fertigstellens der Verbundglasscheibe 1 auf. Dabei können optional Teile der Sensoranordnung S mittels einer Laserformatierung, einer silberbeschichteten Folie, einem Flachleiter oder Siebdruck auf einer der Glas-Schichten oder beiden Glas-Schichten und/oder einer Kombinationsfolie F, F₂ und/oder einem Träger T eingebracht werden. Durch die Bereitstellung der Sensoren innerhalb der Verbundglasscheibe 1 entfällt ein vergleichsweise kostenintensiver Schritt der Ausstattung mit einem externen Sensor, wie es aus dem Stand der Technik notwendig ist.

Mit Hilfe der Erfindung wird ein kontaktfreies Auslesen des Sensors / der Sensoren S_{touch}, Sₜₑₘₚ, S_{break}, Sᵣₐᵢₙ sowie deren drahtlose Leistungsversorgung ermöglicht. Hierdurch entfallen Kabelstrecken innerhalb des Automobils/des Fenstersystems, da sowohl die Auslesung als auch die Versorgung drahtlos erfolgt. Bei der Integration einer Vielzahl von Sensoren, die mit Hilfe einer gemeinsamen Leistungsversorgungseinrichtung ANT₃ versorgt und durch eine gemeinsame Datenempfangseinrichtung ANT₄ ausgelesen werden, verringert sich der Verkabelungsaufwand noch mehr. Sensoren können so auch an Positionen platziert werden, die bei einer kabelgebundenen Anbindung nicht möglich gewesen wären, da diese im Sichtfeld und damit als störend empfunden würden oder sogar den gesetzlichen Bestimmungen zuwiderlaufen könnten.

Die drahtlose Kommunikation funktioniert aus der Sicht der Sensoranordnung S nach dem Grundprinzip eines aktiven Senders mit Antenne ANT₂, die ins Glas integriert ist, und einem passiven Empfänger mit Antenne ANT₃, der in Reichweite des Sensors installiert wird. Insbesondere kann sich die Antenne zum Empfang ANT₃ auf der Außenseite des Glases oder in direkter Umgebung des Glases eingebettet in das Glasprodukt befinden. Die drahtlose Energieversorgung funktioniert nach dem Prinzip der elektromagnetischen Induktion, mit dem von einer Speisespule ANT₄ Energie in eine Empfängerspule ANT₁ übertragen werden kann. Aus dem Gesichtspunkt der Energieversorgung ist somit die Spule ANT₄ außerhalb des Glases das aktive, die Spule ANT₁ innerhalb des Glases das passive Element. Insbesondere können die Spulen zur Energieversorgung gleichzeitig als Antennen zur Kommunikation dienen.

Die Komponenten der Sensoranordnung S im Glasprodukt sind laminierbar, aufklebbar oder anders im Produkt applizierbar, z.B. als dünne Chips, flexible Leiterpalten oder Elektronik auf Folie oder dünnem, biegbaren Glas. Die Sensoranordnung S im Glasprodukt weist die Empfangsantenne ANT₁, eine Sende-/Empfangseinheit TRX, optional eine Auswerteeinheit muC, z.B. einer (flexiblen) Leiterplatte mit integrierten Schaltkreisen (z.B. D/A Wandler), und mindestens einen Sensor, z.B. einen Temperatursensor, einen Berührungssensor, z.B. eine Flächenkapazität (TouchControl, Fingerprint), etc. auf. Insbesondere im Falle einer Flächenkapazität kann eine schon vorhandene leitfähige Beschichtung (wie z.B. bei beheizbaren oder IR reflektierenden Windschutzscheiben oder in Isolierverglasung) formatiert werden (z.B. per Laserschnitt), so dass ein Teil der Beschichtung elektrisch vom Rest der Scheibe entkoppelt ist und somit als Kapazität fungiert.

Die Sende-/Empfangseinheit TRX weist beispielsweise einen Frequenzgenerator ("Emitter"), eine Empfängereinheit ("Receiver"), und eventuell einen Verstärker auf.

Die Leistungsversorgungseinrichtung ANT₃ und/oder Datenempfangseinrichtung ANT₄ kann auch in oder auf Glas, z.B. an dessen Rand, eingebracht werden. Sie kann z.B. aus in die Kombinationsfolie F eingearbeiteten Drähten bestehen oder mit Silberpaste auf dem Glas bzw. auf einem Schwarzdruck aufdruckt werden. Insbesondere kann eine Leistungsversorgungseinrichtung ANT₃ zur Versorgung von mehreren drahtlosen Sensoranordnungen S verwendet werden. Ebenso kann eine Datenempfangseinrichtung ANT₄ zur Auslesung von mehreren drahtlosen Sensoranordnungen S verwendet werden.

Die Sensoranordnung S kann an beliebiger Position in einer laminierten Verbundglasscheibe 1 oder an beliebiger Stelle in einer Zwei-/Dreifachverglasung oder in einem anderen Glasprodukt platziert werden.

Die Sensoranordnung S weist bevorzugt den eigentlichen Sensor S_{touch}, Sₜₑₘₚ, S_{break}, Sᵣₐᵢₙ, z.B. eine Kapazität oder ein Thermoelement, welches mittels Lₘₑₐₛᵤᵣₑ mit einer Auswerteeinheit muC verbunden ist, auf. Die Auswerteeinheit muC ist z.B. eine (flexible) Leiterplatte mit integrierten Schaltkreisen, welche den Sensor S_{touch}, Sₜₑₘₚ, S_{break}, Sᵣₐᵢₙ ausliest und z.B. die Strom-/Spannungscharakteristik des Sensors S_{touch}, Sₜₑₘₚ, S_{break}, Sᵣₐᵢₙ interpretiert. Die Verbindung Lₘₑₐₛᵤᵣₑ kann je nach Anforderungen und Platzierung des eigentlichen Sensors S_{touch}, Sₜₑₘₚ, S_{break}, Sᵣₐᵢₙ und der Auswerteeinheit über dünne Drähte, z.B. laserformatierte Linien in einer leitfähigen Beschichtung des Glases oder einer zusätzlichen silberbeschichteten PET Folie, durch einen Flachleiter oder Silberdruck hergestellt werden. Die Auswerteeinheit muC wird über eine Leistungsleitung L_{power} und eine Datenleitung L_{data} mit der Sende-/Empfangseinheit TRX verbunden. L_{power}, L_{data} kann wie Lₘₑₐₛᵤᵣₑ beschaffen sein. Die Sende-/Empfangseinheit TRX ist verbunden mit einer Leiterbahn, welche als Spule und Antenne ANT₁ respektive ANT₂ fungiert. ANT₁ respektive ANT₂ kann wie Lₘₑₐₛᵤᵣₑ beschaffen sein. ANT₁ respektive ANT₂ koppelt elektromagnetisch an eine außerhalb des sichtbaren Bereiches oder außerhalb des Glasproduktes befindlichen Spule/Antenne ANT₃ respektive ANT₄, welche einerseits die Signale von der Sende-/Empfangseinheit TRX aufnimmt, andererseits die Sende-/Empfangseinheit TRX induktiv mit Leistung versorgt. Über ANT₃ wird elektrische Leistung an die Sensoranordnung S bereitgestellt und über ANT₄ werden die Daten der Sensoranordnung S ausgelesen. Auf der Seite der Leistungsversorgungseinrichtung ANT₃ ist beispielsweise ein Emitter angeordnet, der elektromagnetische Strahlung zur drahtlosen Leistungsversorgung erzeugt. Die elektromagnetische Strahlung wird über ANT₃ abgegeben und von der Sende-/Empfangseinheit TRX über ANT₁ empfangen. Weiterhin ist auf der Seite der Datenempfangseinrichtung ANT₄ ein Receiver angeordnet, der die von der Sende-/Empfangseinheit TRX generierten und von ANT₂ ausgesandten Wellen detektiert. Ein auf Seite der Datenempfangseinrichtung ANT₄ angeordneter Analysator/Wandler trennt das Nutzsignal und wandelt es in interpretierbare Daten, z.B. zur Weiterleitung an einen Bus um. In den Figuren 3-5 ist ein beispielhafter Schichtstapel zur Umsetzung eines drahtlosen Sensorsystems in Glasprodukten gezeigt, beispielhaft gezeigt am Fall von laminiertem Glas. Zwischen der ersten Glas-Schicht GS₁ und der zweiten Glas-Schicht GS₂ ist eine Kombinationsfolie F eingelegt, in die ggf. Aussparungen, z.B. für die Sende-/Empfangseinheit TRX, die Auswerteeinheit muC und den eigentlichen Sensor S_{touch}, Sₜₑₘₚ, S_{break}, Sᵣₐᵢₙ geschnitten werden können. Statt eines eingelegten Sensors S_{touch}, Sₜₑₘₚ, S_{break}, Sᵣₐᵢₙ kann auch die Funktionalität der leitfähigen Schicht LS genutzt werden, z.B. als kapazitiver Sensor. Sind Sende-/Empfangseinheit TRX, Auswerteeinheit muC, S_{touch}, Sₜₑₘₚ, S_{break}, Sᵣₐᵢₙ auf einer flexiblen, ausreichend dünnen PET Folie aufgebracht, so müssen in die Kombinationsfolie F keine Aussparungen eingebracht werden und Sende-/Empfangseinheit TRX, Auswerteeinheit muC und S_{touch}, Sₜₑₘₚ, S_{break}, Sᵣₐᵢₙ können direkt laminiert werden. Die Verbindungen L_{power}, L_{data}, Lₘₑₐₛᵤᵣₑ zwischen Sende-/Empfangseinheit TRX, Auswerteeinheit muC und S_{touch}, Sₜₑₘₚ, S_{break}, Sᵣₐᵢₙ können auf verschiedene Weise hergestellt werden und z.B. über Laserformatierung der leitfähigen Beschichtung LS, über eine laserformatierte silberbedruckte PET Schicht F₂, über dünne Drähte oder Silberdruck hergestellt sein. Gleiches gilt für die Antenne/Spule ANT₁ und ANT₂. Die Leistungsversorgungseinrichtung (ANT₃) zur Bereitstellung von elektromagnetischer Leistung an die Empfangsantenne (ANT₁) zum Einkoppeln der Leistung in die Sende-/Empfangseinheit TRX und eine Datenempfangseinrichtung (ANT₄) zum Empfang von Daten der Sendeantenne (ANT₂) sind außerhalb der Scheibe aufgebaut.

Ferner können diese, was nicht Teil des Erfindungsumfangs ist, außerhalb des sichtbaren Bereichs, z.B. unter oder auf dem Schwarzdruck SD als Silberdruck, aber auch mit Hilfe von Drähten aufgebaut werden.

Solche Verbundglasscheiben 1 weisen eine Dicke von 1 mm bis 8 mm, bevorzugt 3.5 bis 5.3 mm, auf und können somit ohne weiteres wie herkömmliche Verbundglasscheiben weiterverarbeitet werden.

Dabei weisen die erste Glasschicht GS₁ und/oder die zweite Glasschicht GS₂ der Verbundglasscheibe 1 typischerweise eine Dicke, ausgewählt aus einem Bereich von etwa 1.4 mm bis 2.6 mm, auf. Hierdurch werden die geforderten Eigenschaften an einen Splitterschutz und/oder einen Schallschutz gewährleistet.

Mit der thermoplastischen Kombinationsfolie F kann somit in bewährter Weise eine Verbundglasscheibe 1 hergestellt werden, indem eine erste Glas-Schicht GS₁ und eine zweite Glas-Schicht GS₂ erhalten werden, wobei die thermoplastische Folie F auf die erste Glasschicht GS₁ aufgelegt wird und bei Verwendung eines Autoklaven-Prozesses auf die thermoplastische Folie die zweite Glasschicht GS₂ aufgelegt wird. Anschließend wird die thermoplastische Kombinationsfolie F mit der ersten Glas-Schicht GS₁ und der zweiten GlasSchicht GS₂ im Autoklaven und unter Wärme- und Druckeinwirkung verbunden. Natürlich ist die erfindungsgemäße Sensoranordnung S nicht nur in einem Autoklaven-Prozess verwendbar, sondern kann z.B. auch mit einem Vakuum-Thermo-Ofen-Prozess oder dergleichen autoklavenfreien Prozessen verwendet werden.

Auch ist es prinzipiell möglich, zunächst nur eine erste Glas-Schicht GS₁ mit der thermoplastischen Kombinationsfolie F nach Auflage zu verbinden und anschließend erst die zweite Glas-Schicht GS₂ aufzulegen und mit der mit der Glas-Schicht GS₁ vorverbundenen thermoplastischen Kombinationsfolie F zu verbinden. Derartig hergestellte thermoplastische Folien F können in Verbundglasscheiben 1 in Fahrzeugen, insbesondere als Windschutzscheibe oder Gebäuden oder als Informationsdisplay verwendet werden. Eine Verwendung einer erfindungsgemäßen Verbundglasscheibe 1 in einer Head-Up-Display-Anordnung ist ebenfalls möglich.

## Patentansprüche

1. Verbundglasscheibe (1) mit einer Sensoranordnung (S), wobei die Verbundglasscheibe eine erste Glas-Schicht (GS₁) und eine zweite Glas-Schicht (GS₂) verbunden durch eine Kombinationsfolie (F) und eine zweite Kombinationsfolie (F2) oder eine Kombinationsfolie (F) und eine Trägerschicht (T) aufweist, wobei die Verbundglasscheibe (1) ferner eine Sendeantenne (ANT2),
eine Leistungsversorgungseinrichtung (ANT₃), und
eine Datenempfangseinrichtung (ANT₄) aufweist,
wobei die Sensoranordnung (S) aufweist
- zumindest einen Sensor (S_{touch}, Sₜₑₘₚ, S_{break}, Sᵣₐᵢₙ),
- eine Empfangsantenne (ANT₁) konfiguriert zum Erhalt elektrischer Leistung von der Leistungsversorgungseinrichtung (ANT₃) zur Versorgung der Sensoranordnung (S), insbesondere des zumindest einen Sensors (S_{touch}, Sₜₑₘₚ, S_{break}, Sᵣₐᵢₙ), wobei die Leistungsversorgungseinrichtung (ANT3) räumlich von der Sensoranordnung (S) getrennt ist,
- eine Auswerteeinheit (muC) konfiguriert zur Evaluierung von Information des zumindest einen Sensors (S_{touch}, Sₜₑₘₚ, S_{break}, Sᵣₐᵢₙ) und zur Erstellung von Information zur Weitergabe an die Sendeantenne (ANT₂),
- die Sendeantenne (ANT₂) konfiguriert zur Bereitstellung von Information des zumindest einer Sensors (S_{touch}, Sₜₑₘₚ, S_{break}, Sᵣₐᵢₙ) oder der Auswerteeinheit (muC) an die Datenempfangseinrichtung (ANT₄) wobei die Datenempfangseinrichtung (ANT₄) sich außerhalb der Verbundglasscheibe (1) befindet,
wobei sich die Sensoranordnung (S) zwischen der ersten Glas-Schicht (GS₁) und der zweiten Glas-Schicht (GS₂) befindet,
wobei die Sensoranordnung (S) auf dem Träger (T) innerhalb der Verbundglasscheibe (1) aufgebracht ist, oder der zumindest eine Sensor (S_{touch}, Sₜₑₘₚ, S_{break}, Sᵣₐᵢₙ), und die Auswerteinheit (muC) in Aussparungen der Kombinationsfolie (F) eingebracht oder auf der Kombinationsfolie (F) aufgebracht sind und die Empfangsantenne (ANT1), sowie die Sendeantenne (ANT2) auf der zweiten Kombinationsfolie (F2) aufgebracht sind,
**dadurch gekennzeichnet, dass**
die Leistungsversorgungseinrichtung (ANT₃) und die Datenempfangseinrichtung (ANT₄) auf einer Außenseite der ersten und/oder der zweiten Glas-Schicht (GS₁, GS₂) angeordnet ist.

2. Verbundglasscheibe (1) nach Anspruch 1, wobei die Empfangsantenne (ANT₁) und die Sendeantenne (ANT₂) in einer physikalischen Antenne vereint sind.

3. Verbundglasscheibe (1) nach Anspruch 1 oder 2, wobei die Sensoranordnung (S) einen Temperatursensor (Sₜₑₘₚ) und/oder einen Lichtsensor und/oder einen Berührungssensor (S_{touch}) und/oder einen Bruchsensor (S_{break}) und/oder einen Regensensor (Sᵣₐᵢₙ) aufweist.

4. Verbundglasscheibe (1) nach einem der Ansprüche 1 bis 3, wobei zumindest Teile der Sendeantenne (ANT₂) und/oder der Empfangsantenne (ANT₁) als Drähte auf oder in der Kombinationsfolie (F) aufgebracht bzw. eingebracht sind, wenn die Verbundglasscheibe die erste Glas-Schicht (GS₁) und die zweite Glas-Schicht (GS₂) verbunden durch die Kombinationsfolie (F) und die zweite Kombinationsfolie (F2) aufweist.

5. Verbundglasscheibe (1) nach einem der Ansprüche 1 bis 4, wobei die Sensoranordnung (S) die Sendeantenne (ANT₂) und/oder die Empfangsantenne (ANT₁) als Sensor (S_{touch}, Sₜₑₘₚ, S_{break}, Sᵣₐᵢₙ) nutzt.

6. Verbundglasscheibe (1), nach einem der Ansprüche 1 bis 5, wobei eine Antennenstruktur der Leistungsversorgungseinrichtung (ANT₃) und/oder eine Antennenstruktur der Datenempfangseinrichtung (ANT₄) als Draht oder als gedruckter elektrischer Leiter ausgebildet ist.

7. Übertragungssystem mit einer Verbundglasscheibe (1) nach einem der Ansprüche 1 bis 6, weiterhin aufweisend die räumlich von der Sensoranordnung (S) getrennte Leistungsversorgungseinrichtung (ANT₃) zur Bereitstellung von elektromagnetischer Leistung an die Empfangsantenne (ANT₁) und die Datenempfangseinrichtung (ANT₄) zum Empfang von Daten der Sendeantenne (ANT₂).

8. Übertragungssystem nach Anspruch 7, wobei die Leistungsversorgungseinrichtung (ANT₃) und die Datenempfangseinrichtung (ANT₄) in einer physikalischen Antenne vereint sind.

9. Übertragungssystem nach Anspruch 7 oder 8, wobei die Datenempfangseinrichtung (ANT₄) von der Sendeantenne (ANT₂) erhaltene Informationen wandelt und an ein Bus-System zur Verfügung stellt.

10. Übertragungssystem nach einem der Ansprüche 7 bis 9, wobei mindestens zwei Sensoranordnungen (S) durch eine gemeinsame Leistungsversorgungseinrichtung (ANT₃) versorgt werden und/oder eine gemeinsame Datenempfangseinrichtung (ANT₄) Daten von den mindestens zwei Sensoranordnungen (S) empfängt.

11. Verwendung einer Verbundglasscheibe (1) nach einem der Ansprüche 1 bis 6 in Fahrzeugen oder Gebäuden oder als Informationsdisplay.

12. Verfahren zur Herstellung einer Verbundglasscheibe (1) mit einer Sensoranordnung (S) gemäß einem der Ansprüche 1 bis 6, aufweisend die Schritte:
- Erhalten einer Sensoranordnung (S),
- Einbringen der Sensoranordnung (S) in ein Vorprodukt der Verbundglasscheibe, wobei der Schritt des Einbringens ausgewählt ist aus Laminieren, Kleben, Auflegen,
- Fertigstellen der Verbundglasscheibe.

13. Verfahren nach Anspruch 12, wobei Teile der Sensoranordnung (S) mittels einer Laserformatierung, einer silberbeschichteten Folie, einem Flachleiter oder Siebdruck eingebracht werden.

## Claims

1. Laminated glass pane (1) having a sensor assembly (S), wherein the laminated glass pane has a first glass layer (GS₁) and a second glass layer (GS₂) connected via a combination film (F), and a second combination film (F2) or an combination film (F) and a carrier (T), wherein the laminated glass pane (1) further has
a transmitter antenna (ANT₂), a power supply device (ANT₃), and a data receiving device (ANT₄), wherein the sensor assembly (S) has
- at least one sensor (S_{touch}, Sₜₑₘₚ, S_{break}, Sᵣₐᵢₙ),
- a receiver antenna (ANT₁) configured for obtaining electrical power from the power supply device (ANT₃) for supplying the sensor assembly (S), in particular the at least one sensor (S_{touch}, Sₜₑₘₚ, S_{break}, Sᵣₐᵢₙ), wherein the power supply device (ANT₃) is spatially separated from the sensor assembly (S),
- an evaluation unit (muC) configured for evaluating information of the at least one sensor (S_{touch}, Sₜₑₘₚ, S_{break}, Sᵣₐᵢₙ) and for generating information for transmission to the transmitter antenna (ANT₂),
- the transmitter antenna (ANT₂) configured for providing information of the at least one sensor (S_{touch}, Sₜₑₘₚ, S_{break}, Sᵣₐᵢₙ) or of the evaluation unit (muC) to the data receiving device (ANT₄), wherein the data receiving device (ANT₄) is situated outside the laminated glass pane (1),
wherein the sensor assembly (S) is situated between the first glass layer (GS₁) and the second glass layer (GS₂),
wherein the sensor assembly (S) is applied on the carrier (T) within the laminated glass pane (1), or the at least one sensor (S_{touch}, Sₜₑₘₚ, S_{break}, Sᵣₐᵢₙ) and the evaluation unit (muC) are introduced in cutouts of the combination film (F) or are arranged on the combination film (F), and the receiver antenna (ANT₁) and the transmitter antenna (ANT₂) are arranged on the second combination film (F2),
**characterized in that** the power supply device (ANT₃) and the data receiving device (ANT₄) are arranged on an outer side of the first and/or the second glass layer (GS₁, GS₂).

2. Laminated glass pane (1) according to claim 1, wherein the receiver antenna (ANT₁) and the transmitter antenna (ANT₂) are combined in one physical antenna.

3. Laminated glass pane (1) according to claim 1 or 2, wherein the sensor assembly (S) has a temperature sensor (Sₜₑₘₚ) and/or a light sensor and/or a touch sensor (S_{touch}) and/or a breakage sensor (S_{break}) and/or a rain sensor (Sᵣₐᵢₙ).

4. Laminated glass pane (1) according to one of claims 1 through 3, wherein at least portions of the transmitter antenna (ANT₂) and/or of the receiver antenna (ANT₁) are applied on or introduced into the combination film (F) as wires, if the laminated glass pane has the first glass layer (GS₁) and the second glass layer (GS₂) connected via the combination film (F) and the second combination film (F2).

5. Laminated glass pane (1) according to one of claims 1 through 4, wherein the sensor assembly (S) uses the transmitter antenna (ANT₂) and/or the receiver antenna (ANT₁) as a sensor (S_{touch}, Sₜₑₘₚ, S_{break}, Sᵣₐᵢₙ).

6. Laminated glass pane (1), according to one of claims 1 through 5, wherein an antenna structure of the power supply device (ANT₃) and/or an antenna structure of the data receiving device (ANT₄) is implemented as a wire or as a printed electrical conductor.

7. Transmission system with a laminated glass pane (1) according to one of claims 1 through 6, further having, spatially separated from the sensor assembly (S), the power supply device (ANT₃) for providing electromagnetic power to the receiver antenna (ANT₁) and the data receiving device (ANT₄) for receiving data of the transmitter antenna (ANT₂).

8. Transmission system according to claim 7, wherein the power supply device (ANT₃) and the data receiving device (ANT₄) are combined in one physical antenna.

9. Transmission system according to claim 7 or 8, wherein the data receiving device (ANT₄) converts data received from the transmitter antenna (ANT₂) and makes them available to a bus system.

10. Transmission system according to one of claims 7 through 9, wherein at least two sensor assemblies (S) are supplied via a common power supply device (ANT₃) and/or a common data receiving device (ANT₄) receives data from the at least two sensor assemblies (S).

11. Use of a laminated glass pane (1) according to one of claims 1 through 6 in vehicles or buildings or as an information display.

12. Method for producing a laminated glass pane (1) having a sensor assembly (S) according to one of claims 1 through 6, comprising the steps:
- Obtaining a sensor assembly (S),
- Introducing the sensor assembly (S) into a precursor of the laminated glass pane, wherein the step of the introduction is selected from laminating, gluing, placing,
- Making the laminated glass pane.

13. Method according to claim 12, wherein portions of the sensor assembly (S) are introduced by means of laser patterning a silver-coated film, a flat conductor, or screenprinting.

## Revendications

1. Vitre en verre feuilleté (1) comportant un ensemble de capteurs (S), dans laquelle la vitre en verre feuilleté comporte une première couche de verre (GS₁) et une deuxième couche de verre (GS₂) reliées par un film combiné (F), et un second film combiné (F2) ou un film combiné (F) et un support (T), dans laquelle la vitre en verre feuilleté (1) comporte en outre
une antenne émettrice (ANT₂), un dispositif d'alimentation électrique (ANT₃) et un dispositif de réception des données (ANT₄), dans lequel l'ensemble de capteurs (S) comporte
- au moins un capteur (S_{touch}, Sₜₑₘₚ, S_{break}, Sᵣₐᵢₙ),
- une antenne réceptrice (ANT₁) configurée pour obtenir de l'énergie électrique du dispositif d'alimentation (ANT₃) afin d'alimenter l'ensemble de capteurs (S), en particulier l'au moins un capteur (S_{touch}, Sₜₑₘₚ, S_{break}, Sᵣₐᵢₙ), le dispositif d'alimentation (ANT₃) étant séparé spatialement de l'ensemble de capteurs (S),
- une unité d'évaluation (muC) configurée pour évaluer les informations provenant d'au moins un capteur (S_{touch}, Sₜₑₘₚ, S_{break}, Sᵣₐᵢₙ) et pour générer des informations à transmettre à l'antenne émettrice (ANT₂),
- l'antenne émettrice (ANT₂) configurée pour fournir les informations d'au moins un capteur (Stouch, Stemp, Sbreak, Srain) ou de l'unité d'évaluation (muC) au dispositif de réception des données (ANT₄), dans lequel le dispositif de réception des données (ANT₄) est situé à l'extérieur de la vitre en verre feuilleté (1),
dans lequel l'ensemble de capteurs (S) est situé entre la première couche de verre (GS₁) et la deuxième couche de verre (GS₂),
l'ensemble de capteurs (S) est appliqué sur le support (T) à l'intérieur de la vitre en verre feuilleté (1), ou au moins un capteur (S_{touch}, Sₜₑₘₚ, S_{break}, Sᵣₐᵢₙ) et l'unité d'évaluation (muC) sont introduits dans des découpes du film combiné (F) ou sont disposés sur le film combiné (F), et l'antenne réceptrice (ANT₁) et l'antenne émettrice (ANT2) sont disposées sur le deuxième film combiné (F2),
**caractérisé par le fait que** le dispositif d'alimentation électrique (ANT₃) et le dispositif de réception des données (ANT₄) sont disposés sur une face extérieure de la première et/ou de la deuxième couche de verre (GS₁, GS₂).

2. Vitre en verre feuilleté (1) selon la revendication 1, dans laquelle l'antenne réceptrice (ANT₁) et l'antenne émettrice (ANT₂) sont combinées en une seule antenne physique.

3. Vitre en verre feuilleté (1) selon la revendication 1 ou 2, dans laquelle l'ensemble de capteurs (S) comporte un capteur de température (Sₜₑₘₚ) et/ou un capteur de lumière et/ou un capteur de toucher (S_{touch}) et/ou un capteur de bris (S_{break}) et/ou un capteur de pluie (Sᵣₐᵢₙ).

4. Vitre en verre feuilleté (1) selon l'une des revendications 1 à 3, dans laquelle au moins des parties de l'antenne émettrice (ANT₂) et/ou de l'antenne réceptrice (ANT₁) sont appliquées sur ou introduites dans le film combiné (F) sous forme de fils, si la vitre en verre feuilleté a la première couche de verre (GS₁) et la deuxième couche de verre (GS₂) reliées par le film combiné (F) et le deuxième film combiné (F2).

5. Vitre en verre feuilleté (1) selon l'une des revendications 1 à 4, dans laquelle l'ensemble de capteurs (S) utilise l'antenne émettrice (ANT₂) et/ou l'antenne réceptrice (ANT₁) comme capteur (S_{touch}, Sₜₑₘₚ, S_{break}, Sᵣₐᵢₙ).

6. Vitre en verre feuilleté (1), selon l'une des revendications 1 à 5, dans laquelle une structure d'antenne du dispositif d'alimentation (ANT₃) et/ou une structure d'antenne du dispositif de réception de données (ANT₄) est réalisée sous forme de fil ou de conducteur électrique imprimé.

7. Système de transmission avec une vitre en verre feuilleté (1) selon l'une des revendications 1 à 6, comportant en outre, séparé dans l'espace de l'ensemble de capteurs (S), le dispositif d'alimentation électrique (ANT₃) pour fournir une puissance électromagnétique à l'antenne réceptrice (ANT₁) et le dispositif de réception de données (ANT₄) pour recevoir les données de l'antenne émettrice (ANT₂).

8. Système de transmission selon la revendication 7, dans lequel le dispositif d'alimentation électrique (ANT₃) et le dispositif de réception de données (ANT₄) sont combinés en une seule antenne physique.

9. Système de transmission selon la revendication 7 ou 8, dans lequel le dispositif de réception de données (ANT4) convertit les données reçues de l'antenne émettrice (ANT2) et les met à la disposition d'un système de bus.

10. Système de transmission selon l'une des revendications 7 à 9, dans lequel au moins deux ensembles de capteurs (S) sont alimentés par un dispositif d'alimentation commun (ANT₃) et/ou un dispositif de réception de données commun (ANT₄) reçoit les données des au moins deux ensembles de capteurs (S).

11. Utilisation d'une vitre en verre feuilleté (1) selon l'une des revendications 1 à 6 dans des véhicules ou des bâtiments ou comme écran d'information.

12. Procédé de fabrication d'une vitre en verre feuilleté (1) comportant un ensemble de capteurs (S) selon l'une des revendications 1 à 6, comprenant les étapes suivantes :
- Obtenir un ensemble de capteurs (S),
- Introduire l'ensemble capteur (S) dans un précurseur du vitrage feuilleté, l'étape d'introduction étant choisie parmi le feuilletage, le collage, le placement,
- Fabrication de la vitre en verre feuilleté.

13. Méthode selon la revendication 12, dans laquelle des parties de l'ensemble capteur (S) sont introduites au moyen d'un marquage au laser d'un film recouvert d'argent, d'un conducteur plat ou d'une sérigraphie.
